# EUROPEAN PATENT APPLICATION

(11) **EP 1 615 149 A2**
(43) Date of publication of application: **11.01.2006**
(21) Application number: 05013305.7
(22) Date of filing: 20.06.2005
(51) Int. Cl.: G06F 17/30

(54) **Geographical location indexing**

(30) Priority: 05.07.2004 GB 0415072
(71) Applicant: Whereonearth Limited, London EC2A 1BR (GB)
(72) Inventor: Riise, Soren, Ruislip Middlesex HA4 0EB (GB); Patel, Devesh, Ruislip Middlesex HA6 6AQ (GB); Campbell, Bruce Andrew, Potters Bar Hertfordshire EN6 2LD (GB)
(74) Representative: Hoarton, Lloyd Douglas Charles

(57) **Abstract**

A geographical location index comprising a plurality of layers of geographical information concerning a geographical area, each layer comprising a division of the geographical area into a plurality of discrete zones which each have a zone identifier and associated geographical co-ordinates of one or more geographical locations contained within that zone.

## Description

This invention relates to a method of indexing data relating to geographical locations and a geographical location index produced by the method.

Indexing geographical location data which has a spatial component is becoming increasingly difficult as data volumes are increasing in size and service providers such as search engines and the like are attempting to organise geographical data for fast retrieval. For many applications dealing with geographical data, such as, but not limited to, "local" searches through the World Wide Web, the most important function is to query data concerning a given geographical point and then to return data ordered by its proximity to the given geographical point, starting with the data nearest to the given geographical point.

A number of spatial indexing technologies allow the querying of objects within a bounded rectangle or circle and will return all data within the requested area. Problems occur when the bounded area is too small and consequently too little (or no) data is retrieved. On the other hand, if the bounded area is too large, then too much data is retrieved. In the first case, the application has to extend the search area to find some or more relevant data and in the second case the volume of data is too great to be efficiently processed either by the application or the user. This means that the scalability in retrieving data is compromised.

There are algorithms that attempt to address this problem from a purely mathematical perspective but these are not discussed further.

The present invention seeks to provide an alternative method for spatial indexing of geographical data to allow results proximal to a target geographical location, i.e. determining from the target geographical location one or more nearby geographical locations or data concerning the nearby geographical locations. This allows the geographical data relating to the target geographical location or nearby geographical locations to be returned more easily. The method differs from traditional spatial indexing by making use of predefined geography (either real or artificial) to create data which can be used for indexing using standard (non-spatial) indexing technology. Hence, the method of the invention allows ready scaling of search results in a manner consistent with normal non-spatial indexing. The method of the invention can also be viewed as offering search results of increased relevance at a local level since it provides improvements in ranking based either on locating names or on geographical hierarchical information.

One aspect of the present invention provides a geographical location index comprising a plurality of layers of geographical information concerning a geographical area, each layer comprising a division of the geographical area into a plurality of discrete zones which each have a zone identifier and associated geographical co-ordinates of one or more geographical locations contained within that zone.

Preferably, each zone has a finite number of neighbouring zones in the same layer.

Conveniently, each layer defines a different set of zones.

Advantageously, the zones in one layer represent a predetermined geographical area.

Preferably, the predefined geographical area in one layer is a country, in another layer is a state, in another layer is a county, in another layer is a postcode/zip code and in another layer is a building.

Conveniently, there is a hierarchy of layers having respective zones of diminishing area so that a top layer provides low resolution division of the geographical area a bottom layer provides high resolution division of the geographical area.

Advantageously, for a particular layer, a record of a subject zone contains a zone identifier for the subject zone, the zone identifiers of zones neighbouring the subject zone, the or each zone identifier of a zone in another layer containing the subject zone and the zone identifiers of all zones contained within the subject zone.

Preferably, the zones of one layer do not overlap any other zones of the same layer.

Conveniently, a zone of one layer overlaps one or more zones of another layer.

Advantageously, the associated geographical co-ordinates comprise the longitude and latitude or x,y co-ordinates of at least one geographical location in a subject zone.

Preferably, each zone is a polygonal area.

Another aspect of the invention provides a database incorporating an index embodying the invention.

A further aspect of the present invention provides a method of indexing data relating to geographical locations comprising: providing a plurality of layers of geographical information concerning a geographical area, each layer comprising a division of the geographical area into a plurality of discrete zones, each of which has a zone identifier and associated geographical co-ordinates each of which co-ordinates defines a geographical location; and associating for each layer a geographical location with those zones containing the geographical location such that a geographical hierarchy is provided for each geographical location.

Another aspect provides a method of utilising a geographical location index comprising a plurality of layers of geographical information concerning a geographical area, each layer comprising a division of the geographical area into a plurality of discrete zones which each have a zone identifier and associated geographical co-ordinates of one or more geographical locations contained within that zone, the method comprising searching the index for a target geographical location and determining therefrom one or more nearby geographical locations or data concerning the nearby geographical locations.

In order that the present invention may be more readily understood, embodiments thereof will now be described, by way of example, with reference to the accompanying drawings, in which:
FIGURE 1 is a schematic view of a top layer low resolution division of a geographical area in accordance with an embodiment of the present invention;
FIGURE 2 is a schematic view of a layer below the top layer of Figure 1 which provides a higher resolution division of the geographical area;
FIGURE 3 is a schematic view of a layer below the layer of Figure 2 which provides a higher resolution division of the geographical area; and
FIGURE 4 is a schematic view of a layer below the layer of Figure 3 which provides a higher resolution division of the geographical area.
FIGURE 5 shows a flow diagram of a method embodying the present invention.

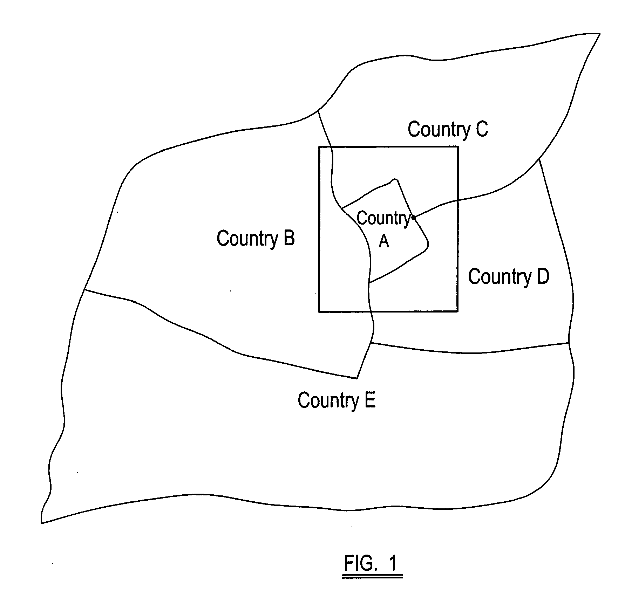

Referring to Figure 1, a geographical area is divided into a system of discrete non-overlapping geographical zones. Each zone contains a plurality of geographical locations characterised by their geographical co-ordinates. Data relating to each of the geographical locations may be associated with each of the geographical locations.

Each zone is described as a polygon with an associated name (such as a country name in the case of Figure 1) or identifier. In Figure 1, the zones are described by their country names, Country1, Country2, etc. Preferably, each zone identifier is based on either a real world name but artificially generated names (such as sequential unique numbers) can also be used. The uniqueness of the identifier is only important for the efficiency of the system.

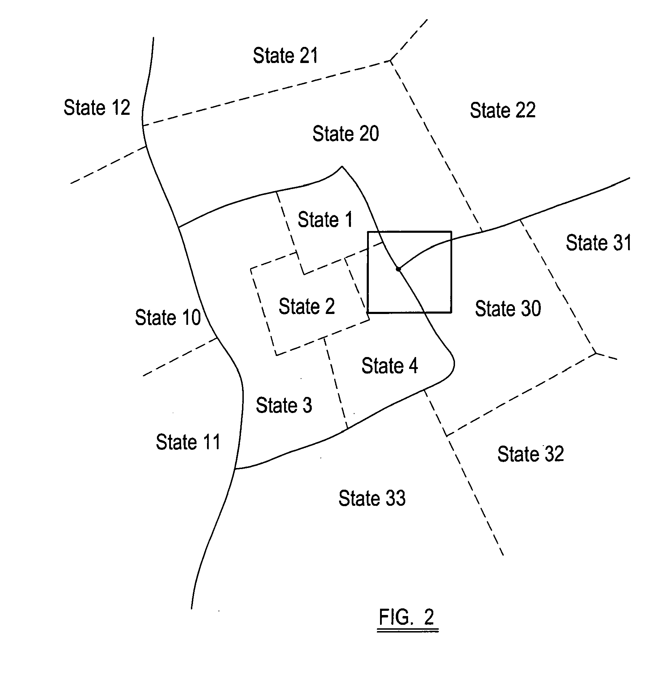

It is possible to form a finite list of the zones in a geographical area by listing all zones by their identification (e.g. in the case of Figure 1, there is a finite list of countries). That list is shown in the first column of Table 1. Since the zones do not overlap, each zone has a finite number of neighbouring zones of the same class, i.e. with the same level of resolution. Each level of resolution is considered as a layer. In the present example, the level of resolution is at a country level: a top layer. Below the top layer, the geographical area is divided into a system of discrete non-overlapping geographical zones of higher resolution than the previous top layer (country layer). In this example, the next layer down from the country level is a state level as depicted in Figure 2. Each of the state zones also contains a plurality of geographical locations characterised by their geographical co-ordinates. Data relating to each of the geographical locations may be associated with each of the geographical locations. The geographical locations are the same geographical locations as in the country level - i.e. if the geographical location is Chicago, then that location is in USA as a country and Illinois as a state - so the same geographical location is in USA and Illinois.

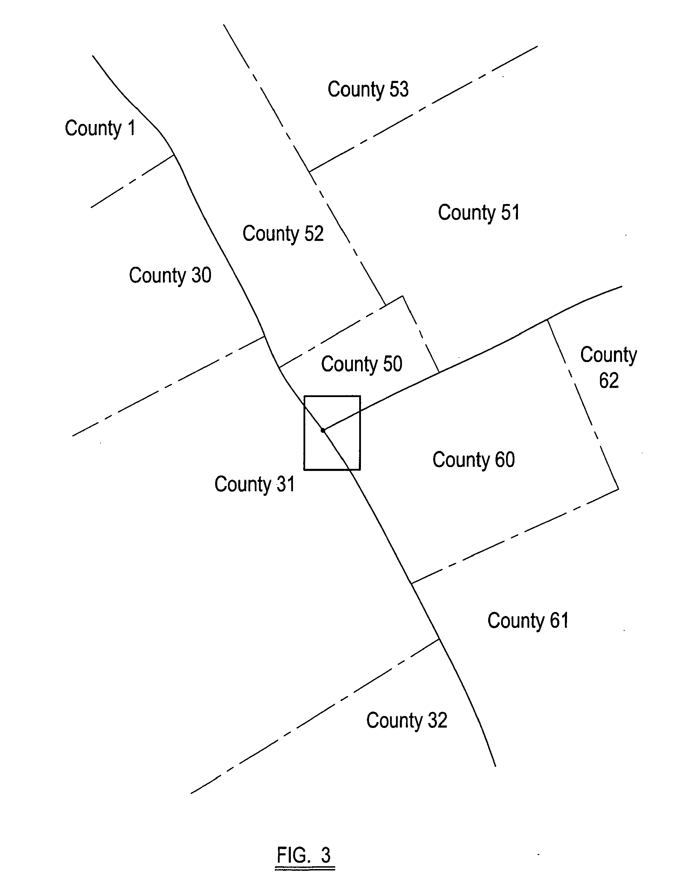

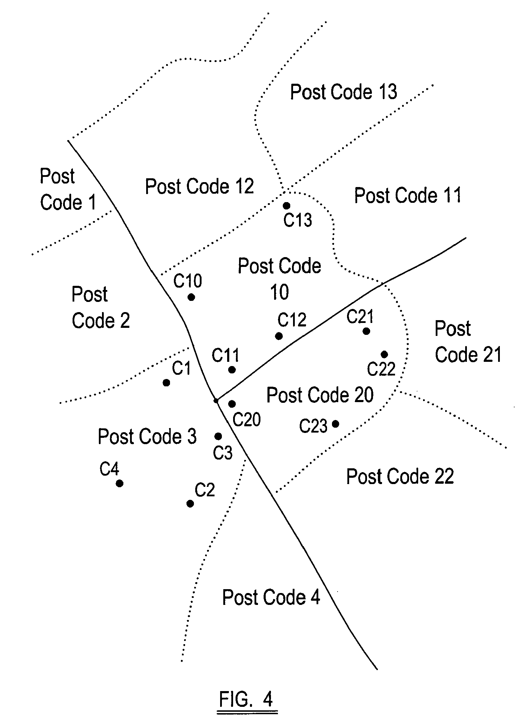

Referring to Figures 3 and 4, these depict further layers of the geographical area: Figure 3 at a County resolution level and Figure 4 at a Post or Zip Code resolution level.

Additionally, each zone contains a finite number of zones in the layer below. Thus, if the country is the USA, then that country contains all the states of the USA. Each of the zones "contained" in the top layer zones is listed under the respective top layer zone in which they are located. The "contained" zones can be regarded as "child" zones. For the top layer, whilst having "child zones", there are no zones which "contain" the top zone - "parent" zones. However, lower zones will have "child" zones and one or more "parent" zones. Conversely, the bottom layer will not have any "child" zones but will only have one or more "parent" zones.

Thus, the index for a particular layer comprises a record of the subject zone identifiers in the layer, the zone identifiers of zones neighbouring each subject zone, the or each zone identifier of a "parent" zone and the or each zone identifier of all "child" zones.

By combining this information, the index is compiled to produce a list of all geographical areas, their adjoining neighbours, "parent" areas and contained "child" areas. This information is represented in the combination of the tables for each of the layers in Tables 1-4. Figure 4 illustrates some example co-ordinates within the "postcode" zones. These co-ordinates and the zones which contain them are listed in Tables 1-4. It will of course be appreciated that all of the surrounding postcode zones may also include further co-ordinates, but these are not shown. It will be appreciated from figures 1 - 4 and the information recorded in the Tables 1-4 that co-ordinates C1 - C4 are contained in area "Post Code 3", but also: County 3; State 4; and Country A.

Utilising this system allows a query for data concerning a given geographical point to be analysed and to return data ordered by its proximity to the given geographical point - in the first instance data would be returned for the subject zone and then data concerning neighbouring zones in the same layer.

The process is repeated for each layer in a geographical system where there are multiple layers of information. So "countries" are processed separately from "states" which are processed separately from "counties" which are processed separately from "postcodes". As each layer of information is processed separately, it is of no importance if the edge polygons in one layer share edges with another level. (Postcodes can typically cross borders of counties in some countries such as in the UK).

Given a point (x,y) or (longitude, latitude) and given a set of named polygons describing the geographical structure, it is possible to determine to which named geographical identifier a point belongs by checking which polygons it falls within, and hence derive all the neighbouring polygons as well.

This invention can be viewed, but not limited to, as a method of increasing relevancy for search engines when doing local searching, by allowing improvements in ranking either based on locality names or geographical hierarchical information.

In one example, the invention is used to index pages from the World Wide Web. A World Wide Web page which mentions "Eiffel Tower" but not "Paris" or "France" can, through this invention, still be indexed using the keywords "Paris" and "France" since the hierarchical structure inherent in the invention contains this information - France and Paris being the parent zones of "Eiffel Tower".

A world wide web search engine can also use this information to improve the internal page ranking for pages which are known to consistently use the hierarchical information. Thus a page which mentions corresponding locations in different layers (example "Eiffel Tower" and "Paris") can be given improved ranking for correct use of both terms. Using the hierarchical information in this matter can prove beneficial in countering the practise of "web spamming" where authors of commercial WebPages attempt to gain higher search engine ranking by including long lists of location names.

For example, a webpage author will, of course, wish for as many people to visit the webpage as possible, so as to increase the number of potential customers for the products and/or services advertised thereon. Should an internet user wish to locate a webpage with particular information, it is common to use the services of an internet search engine. The user inserts a search term and the search engine then scans the available pages on the internet to find pages containing the search term, then returns details of these pages to the user. There are, of course, certain search terms that are used very often in internet searching, for example: "News" or "MP3". The authors of some webpages - which webpages are not necessarily related to "News" or "MP3" - may wish to improve the likelihood of the webpage being returned in a search and will include a list of these common search terms on the webpage. Commonly, such webpages will "hide" these terms by using a white coloured font on a white background, so that the user is unaware of their existence on the webpage.

The invention also, therefore encompasses an analysis whereby the content of a body of information such as a web page or the like is reviewed to determine whether the locations named on the page fall consistently into neighbouring zones, child zones or parent zones. If the determination indicates consistent inclusion, then the page ranking can be approved or possibly improved. If the determination indicates that the page contains random locations not linked to a coherent set (predetermined by the analysis criteria) of zones, then the page ranking can be lowered.

### Indexing and search of data can now follow any of the following methods:

### Method 1:

- Any geographical information inserted into the index is recorded against the identifier of each layer of the geographical area it falls within.
- Any lookup will search data using the identifier's of each layer of the geographical area and their immediate neighbours of the geographical area. (see figure 2).

### Method 2:

- Any geographical information inserted into the index is recorded against the identifier of each layer of the geographical area and their immediate neighbours it falls within (see figure 2).
- Any lookup will search data using the identifiers of each layer of the geographical area.

Coding all spatial data to an identifier means that the spatial search is now reduced to traditional keyed indexing technology. This would be carried out using the following method.

### Method 3:

In order to satisfy a query for specific data in the vicinity of a target geographical location, the following steps would apply.
- Establish the target zone containing the target geographical location.
- Use the structures outlined above to find data fulfilling the query within the target zone.
- Use the structures outlined above to find data fulfilling the query within zones "neighbouring" the target zone. Extend this to include "neighbours of neighbours".
- Use the structures outlined above to find data fulfilling the query within zones containing the target zone - "parent zones".
- Work outwards and upwards, building up a result set that is grouped by zones that are progressively "less local" to the target geographical location.
- To aid efficient data retrieval, the index outlined above would be preprocessed to include "maximum efficient search order" information. This would describe the maximum "depth" of neighbouring zones to explore before it is more efficient to look for data in a wider "containing zone."
- To further aid efficient retrieval, the geographic data structures outlined above could be attributed with the identifiers of their "neighbours" on the basis of "travel time", or other measures based on specific variables. In general, the method would enable such variables to be taken into account when "zone neighbours" are identified.

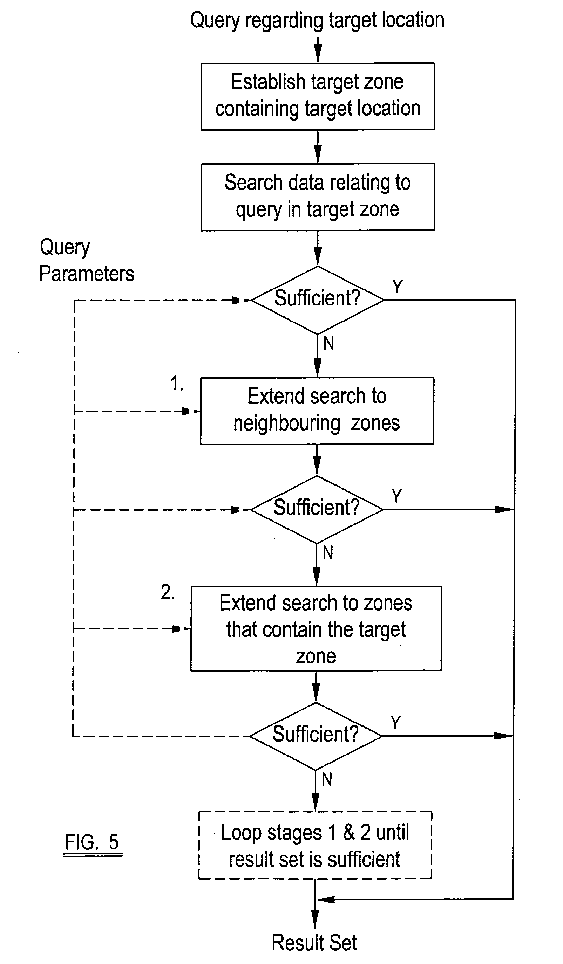

Figure 5, shows a flow diagram illustrating the steps of method 3. As can be seen from the flow diagram, a query regarding a target geographical location is entered and the target zone containing said target geographical location is established. Data relating to the query in that target zone is then searched. Following this step, the amount of data returned is analysed, based on predetermined query parameters, to see if the level of information is sufficient. If the data is not sufficient, then the area in which the query is being searched is increased to include zones neighbouring the originally indicated target zone.

The amount of data returned is again analysed, and should the data not be sufficient, the search zone is increased to "parent" zones. As before, the data returned is then analysed. Should, after these stages, the data returned still not be sufficient, then the search area can be extended still further. For example, the search zone can be extended within in the same zone layer as the original target zone, but at a greater distance from the target zone - "neighbours of neighbours". Should this extended search zone still not be sufficient, then the search area can be enlarged to contain zones higher up in the index hierarchy. In any event, a result set is created, wherein data is listed in the order returned, thus starting proximate the target geographical location and becoming less proximate.

Still further, to aid efficient data retrieval, the index can store other information in relation to a set of given zones. For example, as well as recording a list of neighbours, parents and children of any given zone, other information, such as the time it takes to travel between zones can be recorded. For example, a user could use an index embodying the present invention to query all of the churches within a two hour drive of a target geographical location (e.g. their home).

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

### TABLES :

**Table 1 Country Layer (Top Layer):**

| Polygon Identifier | Neighbour Polygons | Parent Polygon(s) | Child Polygon(s) | Geographical Co-ordinates contained in subject polygon |
|---|---|---|---|---|
| Country A | Country B | None | State 1 | Co-ordinate 1 (C1) |
| | Country C | | State 2 | Co-ordinate 2 (C2) |
| | Country D | | State 3 | Co-ordinate 3 (C3) |
| | | | State 4 | Co-ordinate 4 (C4) |
| Country B | Country A | None | State 10 | |
| | Country C | | State 11 | |
| | Country D | | State 12 | |
| | Country E | | State 13 | |
| Country C | Country A | None | State 20 | Co-ordinate 10 |
| | Country B | | State 21 | (C10) |
| | Country D | | State 22 | Co-ordinate 11 |
| | | | State 23 | (C11) |
| | | | | Co-ordinate 12 |
| | | | | (C12) |
| | | | | Co-ordinate 13 |
| | | | | (C13) |
| Country D | Country A | None | State 30 | Co-ordinate 20 |
| | Country B | | State 31 | (C20) |
| | Country C | | State 32 | Co-ordinate 21 |
| | Country E | | State 33 | (C21) |
| | | | | Co-ordinate 22 |
| | | | | (C22) |
| | | | | Co-ordinate 23 |
| | | | | (C23) |
| Country E | Country B | None | State 40 | |
| | Country D | | State 41 | |
| | | | State 42 | |
| | | | State 43 | |

**Table 2 State Layer (selection):**

| Polygon Identifier | Neighbour Polygons | Parent Polygon(s) | Child Polygon(s) | Geographical Co-ordinates contained in subject polygon |
|---|---|---|---|---|
| State 1 | State 2 | Country A | County 1 | |
| | State 3 | | County 2 | |
| | State 4 | | County 3 | |
| | State 20 | | County 4 | |
| State 2 | State 1 | Country A | County 10 | |
| | State 3 | | County 11 | |
| | State 4 | | County 12 | |
| | | | County 13 | |
| State 3 | State 1 | Country A | County 20 | |
| | State 2 | | County 21 | |
| | State 4 | | County 22 | |
| | State 10 | | County 23 | |
| | State 11 | | | |
| | State 20 | | | |
| | State 33 | | | |
| State 4 | State 1 | Country A | County 30 | Co-ordinate 1 (C1) |
| | State 2 | | County 31 | Co-ordinate 2 (C2) |
| | State 3 | | County 32 | Co-ordinate 3 (C3) |
| | State 20 | | County 33 | Co-ordinate 4 (C4) |
| | State 30 | | | |
| | State 33 | | | |
| State 10 | State 3 | Country B | County 40 | |
| | State 11 | | County 41 | |
| | State 12 | | County 42 | |
| | State 20 | | County 43 | |
| State 20 | State 1 | Country C | County 50 | Co-ordinate 10 |
| | State 3 | | County 51 | (C10) |
| | State 4 | | County 52 | Co-ordinate 11 |
| | State 10 | | County 53 | (C11) |
| | State 12 | | | Co-ordinate 12 |
| | State 21 | | | (C12) |
| | State 22 | | | Co-ordinate 13 |
| | State 30 | | | (C13) |
| State 30 | State 4 | Country D | County 60 | Co-ordinate 20 |
| | State 20 | | County 61 | (C20) |
| | State 22 | | County 62 | Co-ordinate 21 |
| | State 31 | | County 63 | (C21) |
| | State 32 | | | Co-ordinate 22 |
| | State 33 | | | (C23) |
| | | | | Co-ordinate 23 |
| | | | | (C23) |

**Table 3 County Layer (selection):**

| Polygon Identifier | Neighbour Polygons | Parent Polygon(s) | Child Polygon(s) | Geographical Co-ordinates contained in subject polygon |
|---|---|---|---|---|
| County 31 | County 30 | State 4 | Post Code 1 | Co-ordinate 1 (C1) |
| | County 32 | | Post Code 2 | Co-ordinate 2 (C2) |
| | County 50 | | Post Code 3 | Co-ordinate 3 (C3) |
| | County 52 | | Post Code 4 | Co-ordinate 4 (C4) |
| | County 60 | | | |
| | County 61 | | | |
| County 50 | County 31 | State 20 | Post Code 10 | Co-ordinate 10 |
| | County 51 | | Post Code 11 | (C10) |
| | County 52 | | Post Code 12 | Co-ordinate 11 |
| | County 60 | | Post Code 13 | (C11) |
| | | | | Co-ordinate 12 |
| | | | | (C12) |
| | | | | Co-ordinate 13 |
| | | | | (C13) |
| County 60 | County 31 | State 30 | Post Code 20 | Co-ordinate 20 |
| | County 50 | | Post Code 21 | (C20) |
| | County 51 | | Post Code 22 | Co-ordinate 21 |
| | County 61 | | Post Code 23 | (C21) |
| | County 62 | | | Co-ordinate 22 |
| | | | | (C22) |
| | | | | Co-ordinate 23 |
| | | | | (C23) |

**Table 4 Post Code Layer (selection) (penultimate to bottom layer):**

| Polygon Identifier | Neighbour Polygons | Parent Polygon(s) | Child Polygon(s) | Geographical Co-ordinates contained in subject polygon |
|---|---|---|---|---|
| Post Code 3 | Post Code 2 | County 31 | Building 1 | Co-ordinate 1 (C1) |
| | Post Code 4 | | Building 2 | Co-ordinate 2 (C2) |
| | Post Code 10 | | Building 3 | Co-ordinate 3 (C3) |
| | Post Code 20 | | Building 4 | Co-ordinate 4 (C4) |
| Post Code 10 | Post Code 2 | County 50 | Building 10 | Co-ordinate 10 |
| | Post Code 3 | | Building 11 | (C10) |
| | Post Code 4 | | Building 12 | Co-ordinate 11 |
| | Post Code 11 | | Building 13 | (C11) |
| | Post Code 12 | | | Co-ordinate 12 |
| | Post Code 13 | | | (C12) |
| | Post Code 20 | | | Co-ordinate 13 |
| | Post Code 21 | | | (C13) |
| Post Code 20 | Post Code 3 | County 60 | Building 20 | Co-ordinate 20 |
| | Post Code 4 | | Building 21 | (C20) |
| | Post Code 10 | | Building 22 | Co-ordinate 21 |
| | Post Code 11 | | Building 23 | (C21) |
| | Post Code 21 | | | Co-ordinate 22 |
| | Post Code 22 | | | (C22) |
| | | | | Co-ordinate 23 |
| | | | | (C23) |

## Claims

1. A geographical location index comprising a plurality of layers of geographical information concerning a geographical area, each layer comprising a division of the geographical area into a plurality of discrete zones which each have a zone identifier and associated geographical co-ordinates of one or more geographical locations contained within that zone.

2. An index according to any preceding claim, wherein each zone has a finite number of neighbouring zones in the same layer.

3. An index according to Claim 1, wherein each layer defines a different set of zones.

4. An index according to Claim 3, wherein the zones in one layer represent a predetermined geographical area.

5. An index according to Claim 4, wherein the predefined geographical area in one layer is a country, in another layer is a state, in another layer is a county, in another layer is a postcode/zip code and in another layer is a building.

6. An index according to Claim 5, wherein there is a hierarchy of layers having respective zones of diminishing area so that a top layer provides low resolution division of the geographical area a bottom layer provides high resolution division of the geographical area.

7. An index according to any preceding claim, wherein for a particular layer, a record of a subject zone contains a zone identifier for the subject zone, the zone identifiers of zones neighbouring the subject zone, the or each zone identifier of a zone in another layer containing the subject zone and the zone identifiers of all zones contained within the subject zone.

8. An index according to any preceding claim, wherein the zones of one layer do not overlap any other zones of the same layer.

9. An index according to any preceding claim, wherein a zone of one layer overlaps one or more zones of another layer.

10. An index according to any preceding claim, wherein the associated geographical co-ordinates comprise the longitude and latitude or x,y co-ordinates of at least one geographical location in a subject zone.

11. An index according to any preceding claim, wherein each zone is a polygonal area.

12. A database incorporating an index according to any preceding claim.

13. A method of indexing data relating to geographical locations comprising:
providing a plurality of layers of geographical information concerning a geographical area, each layer comprising a division of the geographical area into a plurality of discrete zones, each of which has a zone identifier and associated geographical co-ordinates each of which co-ordinates defines a geographical location; and associating for each layer a geographical location with those zones containing the geographical location such that a geographical hierarchy is provided for each geographical location.

14. A method of utilising a geographical location index comprising a plurality of layers of geographical information concerning a geographical area, each layer comprising a division of the geographical area into a plurality of discrete zones which each have a zone identifier and associated geographical co-ordinates of one or more geographical locations contained within that zone, the method comprising searching the index for a target geographical location and determining therefrom one or more nearby geographical locations or data concerning the nearby geographical locations.

15. A method of analyzing the content of a body of information with reference to a geographical location index comprising a plurality of layers of geographical information concerning a geographical area, each layer comprising a division of the geographical area into a plurality of discrete zones which each have a zone identifier and associated geographical co-ordinates of one or more geographical locations contained within that zone, to determine whether geographical locations named in the body of information fall into a predetermined set of zones.

16. A method according to Claim 15, wherein there are a plurality of bodies of information which are ranked with respect to one another, the method further comprising confirming, lowering or raising the ranking of one of the bodies of information in dependence on an extent to which geographical locations named in the body of information fall into the predetermined set of zones.
